# EUROPEAN PATENT SPECIFICATION

(11) **EP 3 051 762 B1**
(45) Date of publication and mention of the grant of the patent: **10.07.2019**
(21) Application number: 13896363.2
(22) Date of filing: 29.10.2013
(51) Int. Cl.: H04L 27/38, H04L 27/00

(54) **PHASE NOISE CORRECTION METHOD, DEVICE AND SYSTEM**
VERFAHREN, VORRICHTUNG UND SYSTEM ZUM KORRIGIEREN VON PHASENRAUSCHEN
PROCÉDÉ, DISPOSITIF ET SYSTÈME DE CORRECTION DE BRUIT DE PHASE

(43) Date of publication of application: 03.08.2016
(73) Proprietor: Huawei Technologies Co., Ltd., Longgang District Shenzhen, Guangdong 518129 (CN)
(72) Inventor: WANG, Yong, Shenzhen Guangdong 518129 (CN); WANG, Wei, Shenzhen Guangdong 518129 (CN); CHEN, Mo, Shenzhen Guangdong 518129 (CN)
(74) Representative: Körber, Martin Hans
(86) International application number: PCT/CN2013/086162
(87) International publication number: WO 2015/061968

(56) References cited:
- WO-A2-2008/087590
- CN-A- 1 934 793
- CN-A- 1 954 572
- CN-A- 103 259 598
- US-A1- 2007 025 461
- US-A1- 2012 147 928
- US-A1- 2012 328 046
- US-B1- 7 190 741
- ANGIRAS R VARMA ET AL: "Phase Noise Compensation for OFDM Wlan Systems using Superimposed Pilots", COMMUNICATION SYSTEMS, 2006. ICCS 2006. 10TH IEEE SINGAPORE INTERNATIO NAL CONFERENCE ON, IEEE, PI, 1 October 2006 (2006-10-01), pages 1-5, XP031042221, ISBN: 978-1-4244-0410-0

## Description

### TECHNICAL FIELD

The present invention relates to the field of signal processing, and in particular, to a method, a device, and a system for correcting phase noise.

### BACKGROUND

Phase noise is an important index for measuring quality of frequency stability of a frequency standard source (such as a high-stability crystal oscillator or an atomic frequency standard), and is also modulation noise in a communications system. In a wireless communications system, an influence of phase noise is usually reduced by customizing a local oscillator with higher performance. However, with the increase of frequency, the deterioration of phase noise is increasingly severe, so that, in a wireless communications system or a microwave communications system, phase noise, which can be acquired, of a local oscillator is poorer. Therefore, possible modulation schemes for the system are increasingly limited. In the prior art, in a microwave system, phase noise is usually corrected in a manner of inserting a pilot signal into a time domain. That is, a receiver acquires, in a specific time period, a phase error of an input signal with a pilot signal inserted, acquires a phase error of an original input signal with no pilot signal inserted, and performs a linear interpolation between the two phase errors to obtain a phase deviation value of phase noise, thereby correcting the phase noise according to the phase deviation value.

US 2012/0328046 A1 relates to a technology for realizing an ideal symbol configuration for frequency offset estimation, transmission path fluctuation (channel fluctuation) estimation and synchronization/signal detection, in MIMO-OFDM communication.

Angiras R. Varma et al: "Phase Noise Compensation for OFDM Wlan Systems using Superimposed Pilots" describes a phase-error estimation technique for OFDM based WLAN system. The proposed technique utilizes superimposed (or embedded) pilots for phase-tracking within OFDM data packets. However, the inventor finds that accuracy of the phase deviation value acquired by the foregoing method for correcting phase noise is excessively low, and therefore, the receiver can only perform rough correction on the phase noise. In addition, because the accuracy of the phase deviation value is too low, the foregoing method for correcting phase noise cannot be used in some scenarios with a higher requirement for phase noise (for example, a scenario of high-order QAM (Quadrature Amplitude Modulation) (above 256QAM) modulation, or a scenario of OFDM (Orthogonal Frequency Division Multiplexing, orthogonal frequency division multiplexing) modulation, or a scenario with a higher requirement for a signal to noise ratio).

### SUMMARY

The present invention provides a method, a device, and a computer program for correcting phase noise, which can accurately correct phase noise.

The invention is solely defined by the appended claims. In the following, references to embodiments not falling within the scope of the claims are to be understood as examples useful for understanding the invention.

To achieve the foregoing objective, the following technical solutions are used in the embodiments of the present invention:
According to a first aspect, a receiving device is provided, and includes: a transceiver module, a mixer, an oscillator, a digital filter, a data processor, and a data normalization module, where the transceiver module is configured to communicate with a first antenna group;
the transceiver module is configured to receive an output signal returned by the first antenna group, and send the output signal to the mixer, where the output signal is generated by a transmitting device by mixing a signal, which is obtained by superposing an original signal and a pilot signal, with a second local oscillator signal (22) to achieve a frequency conversion;
whereby the pilot signal comprises a known signal or a signal with a certain known regular pattern;
the mixer is configured to mix the output signal with a second local oscillator signal generated by the oscillator, to generate a first output signal;
the digital filter is configured to filter the first output signal to extract a first pilot signal that carries phase noise and that is formed after the frequency conversion of said pilot signal;
the data processor is configured to:
   obtain a phase noise superposition function according to the first pilot signal that carries phase noise and the pilot signal by substituting said first pilot signal and said pilot signal into a function model of the phase noise superposition function comprising coefficients so as to calculate the coefficients;
   perform a function inversion operation on the phase noise superposition function to obtain an inverse function of the phase noise superposition function;
   acquire a delayed first output signal; and
   substitute the delayed first output signal into the inverse function of the phase noise superposition function to obtain a delayed original signal; and
   the data normalization module is configured to:
      perform data normalization processing on power of the first pilot signal extracted by the digital filter) to extract and normalize power fluctuations of the first pilot signal and to obtain a first pilot signal with stable power.

With reference to the first aspect or the first possible implementation manner of the first aspect, in a first possible implementation manner, the function model satisfies quadratic polynomial summation according to the equation p(x) = ax + bx2 , whereby a and b are coefficients.

According to a second aspect, a method for correcting phase noise is provided, and includes:
receiving, by a receiving device, an output signal sent by a transmitting device, and mixing the output signal with a first local oscillator signal to generate a first output signal, where the output signal is generated by the transmitting device by superposing a pilot signal on an original signal and mixing a signal obtained by the superposing with a second local oscillator signal to achieve a frequency conversion, whereby the pilot signal comprises a known signal or a signal with a certain known regular pattern;
filtering, by the receiving device, the first output signal to extract a first pilot signal that carries phase noise and that is formed after the frequency conversion of said pilot signal;
performing (503), by the receiving device, data normalization processing on power of the first pilot signal that carries phase noise to obtain a first pilot signal with stable power;
obtaining, by the receiving device, a phase noise superposition function according to the first pilot signal that carries phase noise and the pilot signal by substituting said first pilot signal and said pilot signal into a function model of the phase noise superposition function comprising coefficients so as to calculate the coefficients;
performing, by the receiving device, a function inversion operation on the phase noise superposition function to obtain an inverse function of the phase noise superposition function;
acquiring, by the receiving device, a delayed first output signal; and
substituting, by the receiving device, the delayed first output signal into the inverse function of the phase noise superposition function to obtain a delayed original signal.

With reference to the second aspect or the first possible implementation manner of the second aspect, in a first possible implementation manner, the function model satisfies quadratic polynomial summation according to the equation p(x) = ax + bx2, whereby a and b are coefficients.

According to a third aspect, a computer program product is provided, and the computer program product comprising computer program code, which, when executed by a computer unit of a receiving device, will cause the computer unit to perform the method according to the second aspect.

According to the method and the device for correcting phase noise provided by the embodiments of the present invention, a receiving device receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

### BRIEF DESCRIPTION OF DRAWINGS

To describe the technical solutions in the embodiments of the present invention or in the prior art more clearly, the following briefly introduces the accompanying drawings required for describing the embodiments or the prior art. The accompanying drawings in the following description show merely some embodiments of the present invention, and a person of ordinary skill in the art may still derive other drawings from these accompanying drawings without creative efforts.
FIG. 1 is a schematic structural diagram of a receiving device according to an embodiment of the present invention;
FIG. 2 is a schematic structural diagram of another receiving device according to an embodiment of the present invention;
FIG. 3 is a schematic structural diagram of a transmitting device according to an embodiment of the present invention;
FIG. 4 is a schematic structural diagram of a system for correcting phase noise according to an embodiment of the present invention;
FIG. 5 is a schematic flowchart of a method for correcting phase noise according to an embodiment of the present invention;
FIG. 6 is a schematic flowchart of another method for correcting phase noise according to an embodiment of the present invention; and
FIG. 7 is a schematic flowchart of still another method for correcting phase noise according to an embodiment of the present invention.

### DESCRIPTION OF EMBODIMENTS

The following clearly and completely describes the technical solutions in the embodiments of the present invention with reference to the accompanying drawings in the embodiments of the present invention. The invention is defined by the appended claims. In the following, references to embodiments not falling within the scope of the claims are to be understood as examples useful for understanding the invention.

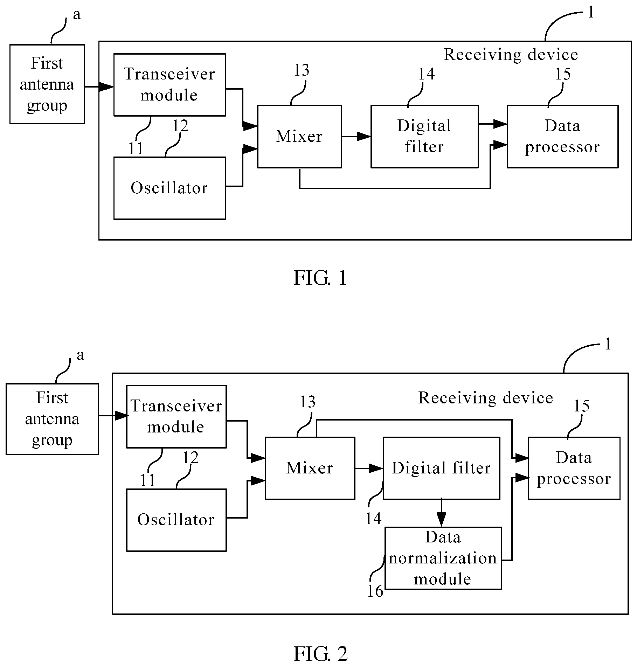

An embodiment of the present invention provides a receiving device. As shown in FIG. 1, the receiving device 1 includes: a transceiver module 11, a mixer 12, an oscillator 13, a digital filter 14, and a data processor 15, where the foregoing transceiver module 11 may be a transceiver interface or communication interface of the receiving device 1, and is configured to communicate with a first antenna group a.

The transceiver module 11 is configured to receive an output signal returned by the first antenna group a, and send the output signal to the mixer 12.

The foregoing output signal is generated by a transmitting device by mixing a signal, which is obtained by superposing an original signal and a pilot signal, with a first local oscillator signal.

The mixer 12 is configured to mix the output signal with a second local oscillator signal generated by the oscillator 13, to generate a first output signal.

The digital filter 14 is configured to filter the first output signal to extract a first pilot signal that carries phase noise.

The data processor 15 is configured to obtain a phase noise superposition function according to the first pilot signal that carries phase noise and the pilot signal.

The data processor 15 is further configured to obtain a delayed original signal according to the phase noise superposition function and the first output signal.

The receiving device provided by the embodiment of the present invention receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

Optionally, as shown in FIG. 2, the receiving device 1 further includes a data normalization module 16, where:
the data normalization module 16 is configured to perform data normalization processing on power of the first pilot signal extracted by the digital filter 14, so as to obtain a first pilot signal with stable power.

Optionally, the data processor 15 is specifically configured to: perform a function inversion operation on the phase noise superposition function to obtain an inverse function of the phase noise superposition function; acquire a delayed first output signal; and substitute the delayed first output signal into the inverse function of the phase noise superposition function to obtain the delayed original signal.

The receiving device provided by the embodiment of the present invention receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

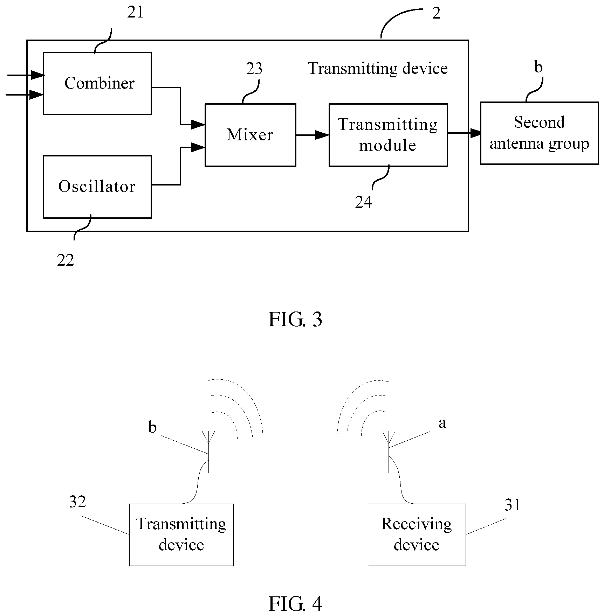

An embodiment of the present invention provides a transmitting device. As shown in FIG. 3, the transmitting device 2 includes: a combiner 21, an oscillator 22, a mixer 23, and a transmitting module 24, where the transmitting module 24 may be a transceiver interface or communication interface of the transmitting device 2, and is configured to communicate with a second antenna group b.

The oscillator 22 is configured to generate a second local oscillator signal.

The combiner 21 is configured to superpose a pilot signal on an original signal to generate a to-be-output signal, and send the to-be-output signal to the mixer 23.

The mixer 23 is configured to mix the to-be-output signal with the second local oscillator signal to generate an output signal.

The transmitting module 24 is configured to transmit the output signal to the second antenna group b, so that the receiving device receives the output signal by using the second antenna group b.

Optionally, the foregoing pilot signal is a signal with a specific characteristic, and the pilot signal includes any one of the following: a modulation signal with a specific characteristic and a monophonic signal.

The transmitting device provided by the embodiment of the present invention sends, to a receiving device, an output signal that is generated by performing frequency conversion on an original signal on which a pilot signal is superposed, so that the receiving device can perform frequency conversion on the output signal again to generate a first output signal, and obtain, from the first output signal, a first pilot signal that carries phase noise, so that the receiving device can calculate a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

An embodiment of the present invention provides a system for correcting phase noise. As shown in FIG. 4, the system 3 includes: a receiving device 31, a transmitting device 32, a first antenna group a, and a second antenna group b, where the first antenna group a is configured to communicate with the receiving device 31, and the second antenna group b is configured to communicate with the transmitting device 32.

The transmitting device 32 is configured to superpose a pilot signal on an original signal to generate a to-be-output signal, mix the to-be-output signal with a second local oscillator signal to generate an output signal, and send the output signal to the second antenna group b, where the output signal is transmitted to the air by the second antenna group b.

The first antenna group a receives, from the air, the output signal that is transmitted by the second antenna group b, and sends the output signal to the receiving device 31.

The receiving device 31 is configured to: receive the output signal and mix the output signal with the second local oscillator signal to generate a first output signal; filter the first output signal to extract a first pilot signal that carries phase noise; and obtain a phase noise superposition function according to the first pilot signal that carries phase noise and the pilot signal, and obtain a delayed original signal according to the phase noise superposition function and the first output signal.

Optionally, the receiving device 31 is further configured to perform data normalization processing on power of the first pilot signal to obtain a first pilot signal with stable power.

Optionally, the foregoing pilot signal is a signal with a specific characteristic, and the pilot signal includes any one of the following: a modulation signal with a specific characteristic and a monophonic signal.

According to the system for correcting phase noise provided by the embodiment of the present invention, a receiving device receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

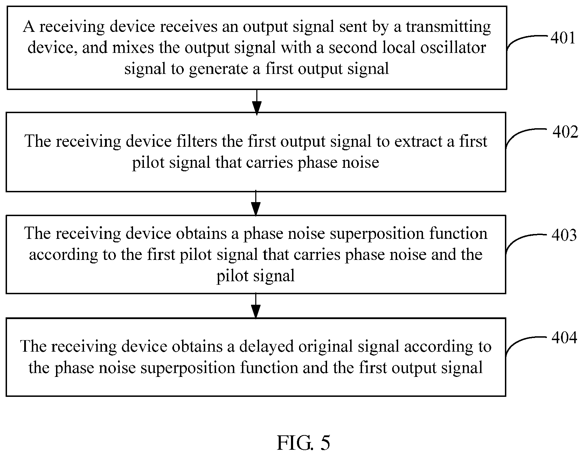

A method for correcting phase noise provided by an embodiment of the present invention, as shown in FIG. 5, may be implemented by a receiving device, and the method for correcting phase noise specifically includes the following steps:
401. The receiving device receives an output signal sent by a transmitting device, and mixes the output signal with a second local oscillator signal to generate a first output signal.

The foregoing output signal is generated by a transmitting device by mixing a signal, which is obtained by superposing an original signal and a pilot signal, with a first local oscillator signal. The foregoing pilot signal is a signal with a specific characteristic, that is, the pilot signal is a known signal or a signal with a certain known regular pattern. Specifically, the pilot signal includes any one of the following: a modulation signal with a specific characteristic and a monophonic signal (for example, a sin(wt) signal or cos(wt) signal). Meanwhile, power of the pilot signal needs to be equal to or greater than a power spectral density of the original signal. In addition, because the transmitting device needs to send the output signal, in a higher frequency band, to the receiving device, the transmitting device needs to perform frequency conversion on the original signal on which a pilot signal is superposed, that is, phase noise information of the second local oscillator signal is superposed on the original signal on which a pilot signal is superposed, and then, the signal obtained by the superposing is transmitted to the air by a second antenna group. Besides, the receiving device needs to perform frequency conversion on the output signal after receiving the output signal that is sent by the transmitting device and received by a first antenna group, so as to reduce a frequency of the output signal, that is, a phase noise signal of the first local oscillator signal is superposed on the output signal, so as to generate a first output signal on which phase noise is superposed.

402. The receiving device filters the first output signal to extract a first pilot signal that carries phase noise.

403. The receiving device obtains a phase noise superposition function according to the first pilot signal that carries phase noise and the pilot signal.

Specifically, the receiving device may calculate the forgoing phase noise superposition function according to the pilot signal superposed on the original signal, and according to the first pilot signal that carries phase noise and that is formed after the pilot signal undergoes frequency conversion.

404. The receiving device obtains a delayed original signal according to the phase noise superposition function and the first output signal.

According to the method for correcting phase noise provided by the embodiment of the present invention, a receiving device receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

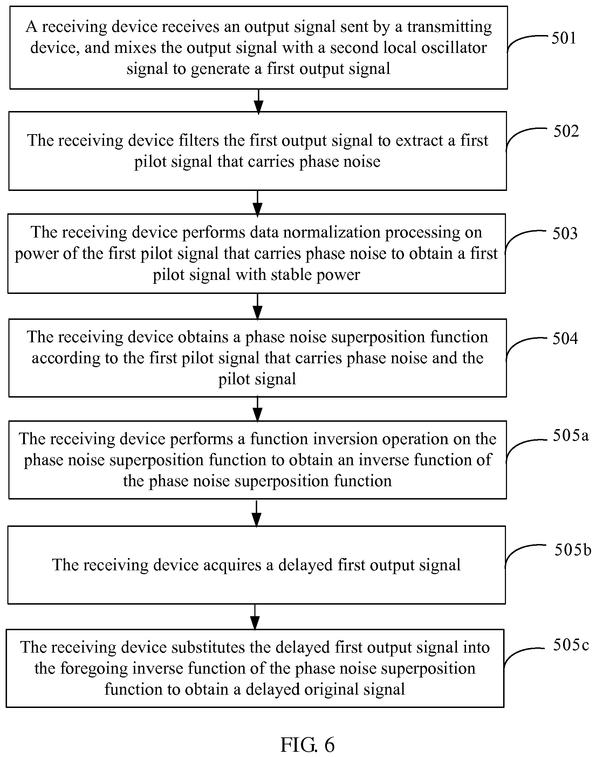

A method for correcting phase noise provided by an embodiment of the present invention, as shown in FIG. 6, may be implemented by a receiving device, and the method for correcting phase noise specifically includes the following steps:
501. The receiving device receives an output signal sent by a transmitting device, and mixes the output signal with a second local oscillator signal to generate a first output signal.

The foregoing output signal *xₜ* is generated by a transmitting device by mixing a signal, which is obtained by superposing an original signal *xₘₐᵢₙ* and a pilot signal *xₚᵢₗₒₜ*, with a first local oscillator signal *LO*₁, that is, *xₜ* = *xₚᵢₗₒₜ* + *xₘₐᵢₙ.* The foregoing pilot signal *xₚᵢₗₒₜ* is a signal with a specific characteristic, that is, the pilot signal *xₚᵢₗₒₜ* is a known signal or a signal with a certain known regular pattern. Specifically, the pilot signal *xₚᵢₗₒₜ* includes any one of the following: a modulation signal with a specific characteristic and a monophonic signal (for example, a sin(wt) signal or cos(wt) signal). Meanwhile, power of the pilot signal *xₚᵢₗₒₜ* needs to be equal to or greater than a power spectral density of the original signal *xₘₐᵢₙ* . In addition, because the transmitting device needs to send the output signal *xₜ*, in a higher frequency band, to the receiving device, the transmitting device needs to perform frequency conversion on the original signal *xₘₐᵢₙ* on which the pilot signal *xₚᵢₗₒₜ* is superposed, that is, phase noise information of the first local oscillator signal *LO*₁ is superposed on the original signal *xₘₐᵢₙ* on which the pilot signal *xₚᵢₗₒₜ* is superposed, and then, a signal obtained by the superposing is transmitted to the air by a second antenna group. Besides, the receiving device needs to perform frequency conversion on the output signal *xₜ* after receiving the output signal *xₜ* that is sent by the transmitting device and received by a first antenna group, so as to reduce a frequency of the output signal, that is, a phase noise signal of the second local oscillator signal *LO*₂ is superposed on the output signal, so as to generate a first output signal *yᵣ* on which phase noise is superposed.

In addition, herein, a formula *yᵣ* = *p*(*xₜ*) may be used to express a process in which the original signal *xₘₐᵢₙ* on which the pilot signal *xₚᵢₗₒₜ* is superposed undergoes two frequency conversion processes with the first local oscillator signal *LO*₁ and the second local oscillator signal *LO*₂, where a signal transfer function during the foregoing two frequency conversion processes is *p*(*x*).

502. The receiving device filters the first output signal to extract a first pilot signal that carries phase noise.

Specifically, herein, a function *H*(*x*) may be used to describe a process in which the receiving device filters the foregoing first output signal *yᵣ* to extract, from the foregoing first output signal *yᵣ*, the first pilot signal *yₚᵢₗₒₜ* that carries phase noise. The *H*(*x*) function functions as a band-pass filter, that is, the foregoing *yₚᵢₗₒₜ* extracting process, and the function is known, and meets a condition that: *xₚᵢₗₒₜ* = *H*(*xₜ*). Therefore, the *yₚᵢₗₒₜ* extracting process may be expressed as *yₚᵢₗₒₜ* = *H*(*yᵣ*) = *H(p*(*xₜ*)) = *p*(*H*(*xₜ*)) = *p(xₚᵢₗₒₜ*). Therefore, it may be obviously seen that the first pilot signal *yₚᵢₗₒₜ* is the pilot signal *xₚᵢₗₒₜ* that carries phase noise.

503. The receiving device performs data normalization processing on power of the first pilot signal that carries phase noise to obtain a first pilot signal with stable power.

Specifically, the performing data normalization processing on power of the first pilot signal *yₚᵢₗₒₜ* in step 503 mainly aims to extract and normalize power fluctuations of the first pilot signal *yₚᵢₗₒₜ*, so as to obtain a first pilot signal *yₚᵢₗₒₜ* with stable power and further adjust a signal link gain.

504. The receiving device obtains a phase noise superposition function according to the first pilot signal that carries phase noise and the pilot signal.

Specifically, it is assumed herein that the phase noise superposition function *p*(*x*) is a model that satisfies quadratic polynomial summation, that is, *p*(*x*) = *ax* + *bx*², where *a* and *b* are unknown numbers. The receiving device substitutes the first pilot signal *yₚᵢₗₒₜ* acquired in the foregoing steps and the pilot signal *xₚᵢₗₒₜ* previously superposed on the original signal *xₘₐᵢₙ* into a function model of the phase noise superposition function *p*(*x*), so as to calculate all accurate coefficients, namely values of phase noise coefficients a and b, in the function *p*(*x*), and further obtain the specific phase noise superposition function *p*(*x*). It should be noted that the foregoing function model, namely *p*(*x*) = *ax*+*bx*², is merely an assumption herein; and in an actual application, the function model may be set according to specific signal data and a specific application scenario, which is not limited herein.

505. The receiving device obtains a delayed original signal according to the phase noise superposition function and the first output signal.

Optionally, step 505 specifically includes the following steps:
505a. The receiving device performs a function inversion operation on the phase noise superposition function to obtain an inverse function of the phase noise superposition function.

Specifically, because a relationship between the phase noise superposition function *p*(*x*) and the first output signal *yᵣ* may be described as *yᵣ* = *p*(*xₜ*), if an original signal, which corresponds to the first output signal *yᵣ* and which the transmitting device wants to send, needs to be acquired, an inverse function *p*⁻¹(*x*) of the phase noise superposition function *p*(*x*) needs to be obtained first.

505b. The receiving device acquires a delayed first output signal.

Specifically, the receiving device acquires a current first output signal *yᵣ*, but the first output signal *yᵣ* is delayed after being processed in the foregoing steps. Therefore, the first output signal *yᵣ* acquired at this time is a delayed first output signal *yₜ*(*t* -*τ*).

505c. The receiving device substitutes the delayed first output signal into the foregoing inverse function of the phase noise superposition function to obtain a delayed original signal.

Specifically, the receiving device obtains a relational expression *xₜ*(*t-τ*) = *p*⁻¹(y*ᵣ*(*t*-*τ*)) between the inverse function *p*⁻¹(*x*) of the phase noise superposition function and the original signal according to a relational expression *yᵣ* = *p*(*xₜ*) between the phase noise superposition function *p*(*x*) and the first output signal *yᵣ*. Therefore, the receiving device can directly substitute the delayed first output signal *yₜ*(*t*-*τ*) into the foregoing relational expression to quickly acquire the delayed original signal *xₜ*(*t*-*τ*), thereby completing a whole process of correcting phase noise.

According to the method for correcting phase noise provided by the embodiment of the present invention, a receiving device receives an output signal that is sent by a transmitting device and generated by performing frequency conversion on an original signal on which a pilot signal is superposed, and performs frequency conversion on the output signal again to generate a first output signal, and then, obtains, from the first output signal, a first pilot signal that carries phase noise, so that the receiving device calculates a phase noise superposition function according to the first pilot signal and the pilot signal. Therefore, the receiving device can correct the phase noise according to the phase noise superposition function to obtain a delayed original signal. Compared with that only a rough phase error value can be acquired in the prior art, phase noise can be corrected accurately in the present invention.

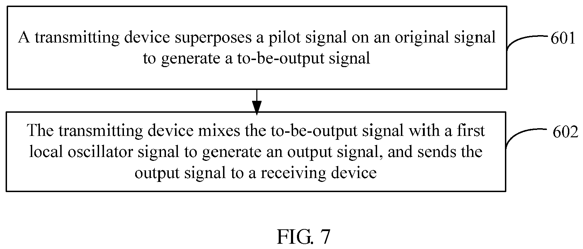

A method for correcting phase noise provided by an embodiment of the present invention, as shown in FIG. 7, may be implemented by a transmitting device, and the method for correcting phase noise specifically includes the following steps:
601. The transmitting device superposes a pilot signal on an original signal to generate a to-be-output signal.

Specifically, the transmitting device superposes the pilot signal *xₚᵢₗₒₜ* on the original signal *xₘₐᵢₙ* to generate the to-be-output signal *xₜ*', that is, *xₜ*' = *xₚᵢₗₒₜ* + *xₘₐᵢₙ*. The foregoing pilot signal *xₚᵢₗₒₜ* is a signal with a specific characteristic, that is, the pilot signal *xₚᵢₗₒₜ* is a known signal or a signal with a certain known regular pattern. Specifically, the pilot signal *xₚᵢₗₒₜ* includes any one of the following: a modulation signal with a specific characteristic and a monophonic signal (for example, a sin(wt) signal or cos(wt) signal). Meanwhile, power of the pilot signal *xₚᵢₗₒₜ* needs to be equal to or greater than a power spectral density of the original signal *xₘₐᵢₙ*.

602. The transmitting device mixes the to-be-output signal with a first local oscillator signal to generate an output signal, and sends the output signal to a receiving device.

Specifically, because the transmitting device needs to send the output signal *xₜ*, in a higher frequency band, to the receiving device, the transmitting device needs to perform frequency conversion on the original signal *xₘₐᵢₙ* on which the pilot signal *xₚᵢₗₒₜ* is superposed, that is, phase noise information of the first local oscillator signal *LO*₁ is superposed on the original signal *xₘₐᵢₙ* on which the pilot signal *xₚᵢₗₒₜ* is superposed, and then, a signal obtained by the superposing is transmitted to the air by a second antenna group, so that a first antenna group on a receiving device side receives the signal, and then, transmits the signal to the receiving device.

According to the method for correcting phase noise provided by the embodiment of the present invention, a transmitting device sends, to a receiving device, an output signal generated by performing frequency conversion on an original signal on which a pilot signal is superposed, so that the receiving device can perform frequency conversion on the output signal again to generate a first output signal, and obtain, from the first output signal, a first pilot signal that carries phase noise, so that the receiving device calculates a phase noise superposition function according to the first pilot signal and the pilot signal, Therefore, the receiving device can correct the phase noise according to the phase noise superposition function to obtain a delayed original signal. Compared with that only a rough phase error value can be acquired in the prior art, phase noise can be corrected accurately in the present invention.

In addition, the embodiments of the present invention are not only for an application scenario of phase noise correction in a microwave system, but also may be applied to an application scenario of phase noise correction in a radio frequency system, an application scenario of laser phase modulation noise correction in an optical communications system, and a scenario of radio communication signal transmission in a microwave repeater. It should be noted that the foregoing application scenarios are merely examples, and the present invention is not limited thereto in an actual application.

It can be clearly understood by a person skilled in the art that, for convenient and brief description, the division of the foregoing function modules is used as an example for description, and in an actual application, the foregoing functions may be assigned to different modules for implementation according to a need, that is, an inner structure of the apparatus is divided into different function modules to complete all or a part of the foregoing functions. For a detailed working process of the foregoing system, apparatus, and unit, reference may be made to a corresponding process in the foregoing method embodiments, and details are not described herein again.

According to the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, and may be located in one position or may be distributed on a plurality of network units. A part or all of the units may be selected according to an actual need to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in a form of a software product. The software product is stored in a storage medium and includes several instructions for instructing a computer device (which may be a personal computer, a server, or a network device) or a processor (processor) to perform all or a part of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended to describe the technical solutions of the present application rather than limiting the present application. The invention is solely defined by the appended claims.

## Claims

1. A receiving device (1), comprising a transceiver module (11), a mixer (13), an oscillator (12), a digital filter (14), a data processor (15), and a data normalization module (16), wherein the transceiver module (11) is configured to communicate with a first antenna group (a);
the transceiver module (11) is configured to receive an output signal returned by the first antenna group (a), and send the output signal to the mixer (13), wherein the output signal is generated by a transmitting device (2) by mixing a signal, which is obtained by superposing an original signal and a pilot signal, with a second local oscillator signal (22) to achieve a frequency conversion,
whereby the pilot signal comprises a known signal or a signal with a certain known regular pattern;
the mixer (13) is configured to mix the output signal with a first local oscillator signal generated by the oscillator (12), to generate a first output signal;
the digital filter (14) is configured to filter the first output signal to extract a first pilot signal that carries phase noise and that is formed after the frequency conversion of said pilot signal; wherein
the data processor (15) is configured to:
obtain a phase noise superposition function according to a first pilot signal with stable power that carries phase noise and the pilot signal by substituting said first pilot signal with stable power and said pilot signal into a function model of the phase noise superposition function comprising coefficients so as to calculate the coefficients;
perform a function inversion operation on the phase noise superposition function to obtain an inverse function of the phase noise superposition function;
acquire a delayed first output signal, which is the first output signal at a time after processing by the digital filter (14) and the data normalization module (16); and
substitute the delayed first output signal into the inverse function of the phase noise superposition function to obtain a delayed original signal, which is the phase noise corrected original signal; and
the data normalization module (16) is configured to:
perform data normalization processing on power of the first pilot signal extracted by the digital filter (14) to extract and normalize power fluctuations of the first pilot signal and to obtain the first pilot signal with stable power.

2. The receiving device (1) according to claim 1, wherein the function model satisfies quadratic polynomial summation according to the equation p(x) = ax + bx², whereby a and b are coefficients.

3. A method for correcting phase noise, comprising:
receiving (401; 501), by a receiving device, an output signal sent by a transmitting device, and mixing the output signal with a first local oscillator signal to generate a first output signal, wherein the output signal is generated by the transmitting device by superposing a pilot signal on an original signal and mixing a signal obtained by the superposing with a second local oscillator signal to achieve a frequency conversion;
whereby the pilot signal comprises a known signal or a signal with a certain known regular pattern;
filtering (402; 502), by the receiving device, the first output signal to extract a first pilot signal that carries phase noise and that is formed after the frequency conversion of said pilot signal;
performing (503), by the receiving device, data normalization processing on power of the first pilot signal that carries phase noise to obtain a first pilot signal with stable power;
obtaining (403; 504), by the receiving device, a phase noise superposition function according to the first pilot signal with stable power and the pilot signal by substituting said first pilot signal with stable power and said pilot signal into a function model of the phase noise superposition function comprising coefficients so as to calculate the coefficients;
performing (505a), by the receiving device, a function inversion operation on the phase noise superposition function to obtain an inverse function of the phase noise superposition function;
acquiring (505b), by the receiving device, a delayed first output signal, which is the first output signal at a time after the filtering and the data normalization processing; and
substituting (505c), by the receiving device, the delayed first output signal into the inverse function of the phase noise superposition function to obtain a delayed original signal, which is the phase noise corrected original signal.

4. The method according to claim 3, wherein the function model satisfies quadratic polynomial summation according to the equation p(x) = ax + bx², whereby a and b are coefficients.

5. A computer program product, comprising computer program code, which, when executed by a computer unit of a receiving device, will cause the computer unit to perform the method according to any one of claims 3 to 4.

## Patentansprüche

1. Empfangseinrichtung (1), die ein Sende-/Empfangsmodul (11), einen Mischer (13), einen Oszillator (12), ein digitales Filter (14), eine Datenverarbeitungsvorrichtung (15) und ein Datennormierungsmodul (16) umfasst, wobei das Sende-/Empfangsmodul (11) konfiguriert ist, mit einer ersten Antennengruppe (a) zu kommunizieren; wobei das Sende-/Empfangsmodul (11) konfiguriert ist, ein Ausgangssignal, das durch die erste Antennengruppe (a) zurückgegeben wird, zu empfangen und das Ausgangssignal zum Mischer (13) zu senden, wobei das Ausgangssignal durch eine Sendeeinrichtung (2) durch Mischen eines Signals, das durch Überlagern eines ursprünglichen Signals und eines Vorsteuersignals erhalten wird, mit einem zweiten lokalen Oszillatorsignal (22) erzeugt wird, um eine Frequenzumsetzung zu erzielen,
das Vorsteuersignal ein bekanntes Signal oder ein Signal mit einem bestimmten bekannten regelmäßigen Muster umfasst;
der Mischer (13) konfiguriert ist, das Ausgangssignal mit einem ersten lokalen Oszillatorsignal, das durch den Oszillator (12) erzeugt wird, zu mischen, um ein erstes Ausgangssignal zu erzeugen;
das digitale Filter (14) konfiguriert ist, das erste Ausgangssignal zu filtern, um ein erstes Vorsteuersignal, das Phasenrauschen führt und das nach der Frequenzumsetzung des Vorsteuersignals gebildet wird, zu extrahieren;
die Datenverarbeitungsvorrichtung (15) konfiguriert ist zum
Erhalten einer Phasenrauschunterdrückungsfunktion gemäß einem ersten Vorsteuersignal mit stabiler Leistung, das Phasenrauschen führt, und dem Vorsteuersignal durch Substituieren des ersten Vorsteuersignals mit stabiler Leistung und des Vorsteuersignals in ein Funktionsmodell der Phasenrauschunterdrückungsfunktion, die Koeffizienten umfasst, um die Koeffizienten zu berechnen;
Durchführen eines Funktionsumkehrvorgangs an der Phasenrauschunterdrückungsfunktion, um eine Umkehrfunktion der Phasenrauschunterdrückungsfunktion zu erhalten;
Erfassen eines verzögerten ersten Ausgangssignals, das das erste Ausgangssignal zu einer Zeit nach dem Verarbeiten durch das digitale Filter (14) und das Datennormierungsmodul (16) ist; und
Substituieren des verzögerten ersten Ausgangssignals in die Umkehrfunktion der Phasenrauschunterdrückungsfunktion, um ein verzögertes ursprüngliches Signal zu erhalten, das das phasenrauschkorrigierte ursprüngliche Signal ist; und
das Datennormierungsmodul (16) konfiguriert ist zum
Durchführen einer Datennormierungsverarbeitung an der Leistung des ersten Vorsteuersignals, das durch das digitale Filter (14) extrahiert wurde, um Leistungsfluktuationen des ersten Vorsteuersignals zu extrahieren und zu normieren und das erste Vorsteuersignal mit stabiler Leistung zu erhalten.

2. Empfangseinrichtung (1) nach Anspruch 1, wobei das Funktionsmodell eine quadratische Polynomsummation gemäß der Gleichung p(x) = ax + bx² erfüllt, wobei a und b Koeffizienten sind.

3. Verfahren zum Korrigieren von Phasenrauschen, das Folgendes umfasst:
Empfangen (401; 501) durch eine Empfangseinrichtung eines Ausgangssignals, das durch eine Sendeeinrichtung gesendet wurde, und Mischen des Ausgangssignals mit einem lokalen Oszillatorsignal, um ein erstes Ausgangssignal zu erzeugen, wobei das Ausgangssignal durch die Sendeeinrichtung durch Überlagern eines Vorsteuersignals mit einem ursprünglichen Signals und Mischen eines Signals, das durch das Überlagern erhalten wird, mit einem zweiten lokalen Oszillatorsignal erzeugt wird, um eine Frequenzumsetzung zu erzielen; wobei
das Vorsteuersignal ein bekanntes Signal oder ein Signal mit einem bestimmten bekannten regelmäßigen Muster umfasst;
Filtern (402; 502) durch die Empfangseinrichtung des ersten Ausgangssignals, um ein erstes Vorsteuersignal, das Phasenrauschen führt und das nach der Frequenzumsetzung des Vorsteuersignals gebildet wird, zu extrahieren;
Durchführen (503) durch die Empfangseinrichtung einer Datennormierungsverarbeitung an der Leistung des ersten Vorsteuersignals, das Phasenrauschen führt, um ein erstes Vorsteuersignal mit stabiler Leistung zu erhalten;
Erhalten (403; 504) durch die Empfangseinrichtung einer Phasenrauschunterdrückungsfunktion gemäß dem ersten Vorsteuersignal mit stabiler Leistung und dem Vorsteuersignal durch Substituieren des ersten Vorsteuersignals mit stabiler Leistung und des Vorsteuersignals in ein Funktionsmodell der Phasenrauschunterdrückungsfunktion, die Koeffizienten umfasst, um die Koeffizienten zu berechnen;
Durchführen (505a) durch die Empfangseinrichtung eines Funktionsumkehrvorgangs an der Phasenrauschunterdrückungsfunktion, um eine Umkehrfunktion der Phasenrauschunterdrückungsfunktion zu erhalten;
Erfassen (505b) durch die Empfangseinrichtung eines verzögerten ersten Ausgangssignals, das das erste Ausgangssignal zu einer Zeit nach dem Filtern und der Datennormierungsverarbeitung ist; und
Substituieren (505c) durch die Empfangseinrichtung des verzögerten ersten Ausgangssignals in die Umkehrfunktion der Phasenrauschunterdrückungsfunktion, um ein verzögertes ursprüngliches Signal zu erhalten, das das phasenrauschkorrigierte ursprüngliche Signal ist.

4. Verfahren nach Anspruch 3, wobei das Funktionsmodell eine quadratische Polynomsummation gemäß der Gleichung p(x) = ax + bx² erfüllt, wobei a und b Koeffizienten sind.

5. Computerprogrammprodukt, das Computerprogrammcode enthält, der, wenn er durch eine Computereinheit einer Empfangseinrichtung ausgeführt wird, bewirkt, dass die Computereinheit das Verfahren nach einem der Ansprüche 3 bis 4 durchführt.

## Revendications

1. Dispositif récepteur (1) comprenant un module émetteur-récepteur (11), un mélangeur (13), un oscillateur (12), un filtre numérique (14), un processeur de données (15) et un module de normalisation de données (16), dans lequel le module émetteur-récepteur (11) est configuré pour communiquer avec un premier groupe d'antennes (a) ;
le module émetteur-récepteur (11) est configuré pour recevoir un signal de sortie renvoyé par le premier groupe d'antennes (a) et pour envoyer le signal de sortie au mélangeur (13), dans lequel le signal de sortie est généré par un dispositif émetteur (2) en mélangeant un signal, qui est obtenu en superposant un signal original et un signal pilote, avec un second signal d'oscillateur local (22) afin de réaliser une conversion de fréquence,
au cours de laquelle le signal pilote comprend un signal connu ou un signal comprenant un certain motif régulier connu ;
le mélangeur (13) est configuré pour mélanger le signal de sortie avec un premier signal d'oscillateur local généré par l'oscillateur (12), pour générer un premier signal de sortie ;
le filtre numérique (14) est configuré pour filtrer le premier signal de sortie afin d'extraire un premier signal pilote qui porte un bruit de phase et qui est formé après la conversion de fréquence dudit signal pilote ; dans lequel le processeur de données (15) est configuré pour :
obtenir une fonction de superposition du bruit de phase en fonction d'un premier signal pilote à puissance stable qui porte le bruit de phase et le signal pilote en remplaçant ledit premier signal pilote par une puissance stable et ledit signal pilote dans un modèle fonctionnel de la fonction de superposition du bruit de phase comprenant des coefficients, de façon à calculer les coefficients ;
effectuer une opération d'inversion de fonction sur la fonction de superposition du bruit de phase afin d'obtenir une fonction inverse de la fonction de superposition du bruit de phase ;
acquérir un premier signal de sortie retardé, qui est le premier signal de sortie en un instant après le traitement par le filtre numérique (14) et le module de normalisation de données (16) ; et
remplacer le premier signal de sortie retardé dans la fonction inverse de la fonction de superposition du bruit de phase afin d'obtenir un signal original retardé, qui est le bruit de phase corrigé, le module de normalisation de données (16) étant configuré pour :
effectuer un traitement de normalisation des données sur la puissance du premier signal pilote extrait par le filtre numérique (14) afin d'extraire et de normaliser les fluctuations de puissance du premier signal pilote et d'obtenir le premier signal pilote avec une puissance stable.

2. Dispositif de réception (1) selon la revendication 1, dans lequel le modèle de fonction satisfait à la sommation polynomiale quadratique selon l'équation p(x) = ax + bx², où a et b sont des coefficients.

3. Procédé de correction du bruit de phase, comprenant les étapes consistant à :
recevoir (401 ; 501), par un dispositif récepteur, un signal de sortie envoyé par un dispositif émetteur, et mélanger le signal de sortie avec un premier signal de l'oscillateur local pour générer un premier signal de sortie, dans lequel le signal de sortie est généré par le dispositif émetteur en superposant un signal pilote sur un signal d'origine et en mélangeant un signal obtenu par la superposition avec un second signal d'oscillateur local afin de réaliser une conversion de fréquence ;
au cours de laquelle le signal pilote comprend un signal connu ou un signal comprenant un certain motif régulier connu ;
filtrer (402 ; 502), par le dispositif de réception, le premier signal de sortie pour extraire un premier signal pilote qui porte un bruit de phase et qui est formé après la conversion de fréquence dudit signal pilote ;
effectuer (503), par le dispositif de réception, un traitement de normalisation des données sur la puissance du premier signal pilote qui porte le bruit de phase pour obtenir un premier signal pilote avec une puissance stable ;
obtenir (403 ; 504), par le dispositif de réception, une fonction de superposition du bruit de phase en fonction du premier signal pilote à puissance stable et du signal pilote en remplaçant ledit premier signal pilote par une puissance stable et ledit signal pilote dans un modèle fonctionnel de la fonction de superposition du bruit de phase comprenant des coefficients, afin de calculer les coefficients ;
effectuer (505a), par le dispositif de réception, une opération d'inversion de fonction sur la fonction de superposition du bruit de phase afin d'obtenir une fonction inverse de la fonction de superposition du bruit de phase ;
acquérir (505b), par le dispositif de réception, un premier signal de sortie retardé, qui est le premier signal de sortie à la fois après le filtrage et le traitement de normalisation de données ; et
remplacer (505c), par le dispositif de réception, le premier signal de sortie retardé dans la fonction inverse de la fonction de superposition du bruit de phase afin d'obtenir un signal d'origine retardé, qui est le signal d'origine corrigé du bruit de phase.

4. Procédé selon la revendication 3, dans lequel le modèle de fonction satisfait à la sommation polynomiale quadratique selon l'équation p(x) = ax + bx², où a et b sont des coefficients.

5. Progiciel informatique comprenant un code de programme informatique qui, lorsqu'il est exécuté dans une unité informatique d'un dispositif de réception, amène l'unité informatique à mettre en oeuvre le procédé selon l'une quelconque des revendications 3 à 4.
